# EUROPEAN PATENT APPLICATION

(11) **EP 3 184 333 A1**
(43) Date of publication of application: **28.06.2017**
(21) Application number: 15834353.3
(22) Date of filing: 06.08.2015
(51) Int. Cl.: B60H 1/32, B60H 1/00

(54) **AIR-CONDITIONING UNIT**

(30) Priority: 19.08.2014 JP 2014166801
(71) Applicant: DENSO CORPORATION, Kariya-city, Aichi-pref. 448-8661 (JP)
(72) Inventor: KURATA, Takehiro, Kariya-city Aichi 448-8661 (JP); TANIGUCHI, Masami, Kariya-city Aichi 448-8661 (JP); FUJITA, Akira, Kariya-city Aichi 448-8661 (JP); TAKIZAWA, Ryo, Kariya-city Aichi 448-8661 (JP)
(74) Representative: Klingseisen, Franz
(86) International application number: PCT/JP2015/003960
(87) International publication number: WO 2016/027431

(57) **Abstract**

An air-conditioning unit has a case (1), a heat exchanger (13), a blower (12), and a guide plate (20). The case is provided with a first suction port (2) and a second suction port (3). The heat exchanger has a first area (R1) and a second area (R2) into which air from the first suction port or the second suction port flows. The blower causes air flows flowing from the first suction port and the second suction port toward the heat exchanger, and the air flows passing through the heat exchanger. The guide plate is arranged in the case and suppresses a collision of an air flow from the first suction port with an air flow from the second suction port. The guide plate is supported relative to the case to be movable between a first position (P21) and a second position (P22). The guide plate guides air drawn from the first suction port to flow toward the first area of the heat exchanger, and guides air drawn from the second suction port to flow toward the second area of the heat exchanger, when the guide plate is positioned at the first position. The guide plate guides air drawn from the first suction port to flow toward the first area and the second area when the guide plate is positioned at the second position. According to the above-described configuration, a distributional deviation of the air flow that flows into a heat exchanger can be reduced.

## Description

### CROSS REFERENCE TO RELATED APPLICATION

This application is based on Japanese Patent Application No. 2014-166801 filed on August 19, 2014, the disclosure of which is incorporated herein by reference.

### TECHNICAL FIELD

The present disclosure relates to an air-conditioning unit that has a blower blowing air to a heat exchanger, suction ports guiding air to the heat exchanger to which the blower is attached, and a movable guide plate guiding the air from the suction ports toward the heat exchanger.

### BACKGROUND ART

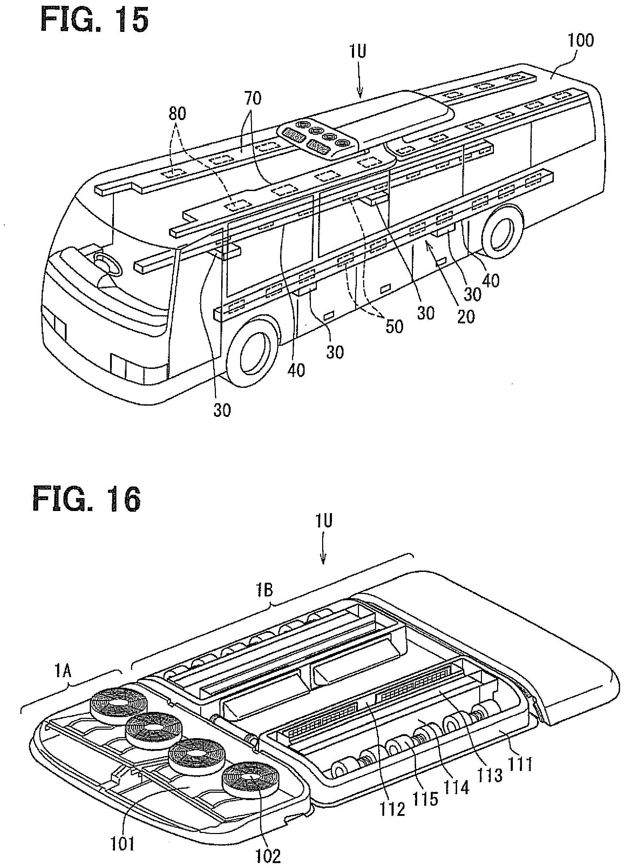

As shown in reference example of FIG. 15 and FIG. 16, an air conditioner for a bus has an air conditioning unit 1 U disposed in a ceiling of a bus 100, and a condenser 101 functions as a heat exchanger is disposed in the air conditioning unit. The heat exchanger is mounted to face frontward and thereby easily receives an air flow from a front side of the bus. An evaporator 113 extending in a front-rear direction of the bus is arranged on a rear side of the condenser 101 that is arranged on the front side. In FIG. 15, a reference number 20 is assigned to a heater device, a reference number 30 is assigned to a heater unit, and a reference number 40 is assigned to a warm air duct. The warm air duct 40 is provided with warm air outlets 50. A reference number 70 is assigned to a cool air duct, and the cool air duct 70 is provided with cool air outlets 80. In FIG. 16, the air conditioning unit 1 U provided in the ceiling configures a cooling unit and has a condensing unit part 1A and a cooling unit part 1B. A reference number 102 is an outside air fan configuring a blower. An air conditioning case 111 therein has an inside/outside air switching door 112, a heater core 114 for reheating, and a blower 115.

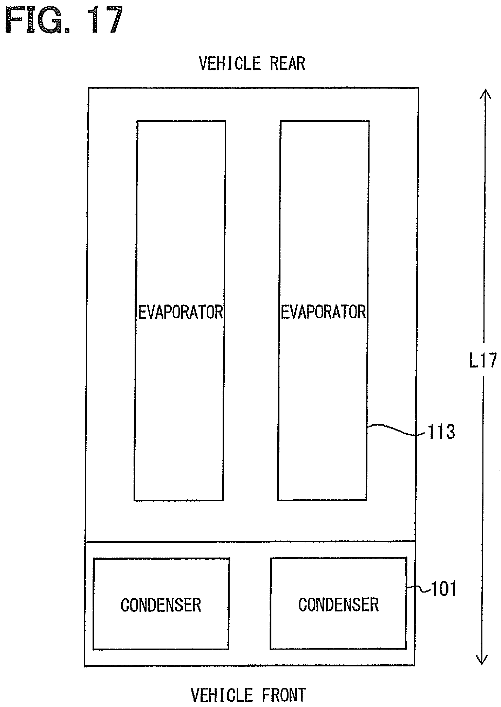

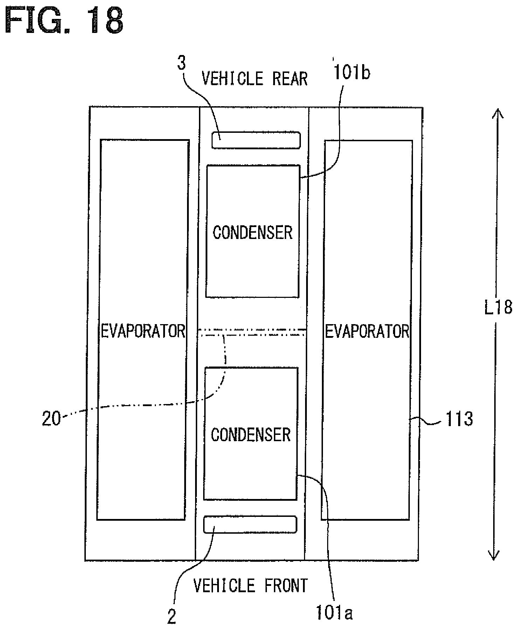

FIG. 17 shows an arrangement of the heater core in the ceiling. According to the arrangement, a dimension L17 of the air conditioner in the front-rear direction of the bus is large. Therefore, a layout shown in FIG. 18 in which the condenser 101 (101a, 101b) are arranged to extend in the front-rear direction of the bus and to be parallel with the evaporator 113 such that a length L18 of an entirety of the air conditioner becomes shortened has been implemented.

According to the layout shown in FIG. 18, air drawn from two suction ports 2, 3 is blown to the heat exchanger through the fan. The two suction ports 2, 3 are open toward the front side and the rear side of the bus respectively. Accordingly, a volume of air flowing into the case 1 from the suction port 2 opening toward the front side increases due to a traveling air when the bus moves. In addition, air from the suction port 2 and air from the suction port 3 collide with each other on an upstream side of the heat exchanger. According to Patent Literature 1, the collision is suppressed by providing a guide plate. However, a distribution of air flowing into the heat exchanger is biased due to the traveling air since the guide plate separates an air flow on the front side and an air flow on the rear side from each other.

Specifically, the guide plate 20 is arranged between the condenser 101a on a vehicle front side and the condenser 101 b on a vehicle rear side as shown by a vertical line in FIG. 18. In this case, there is a fear that air is blown mainly to the condenser 101a on the vehicle front side due to the traveling air caused when the vehicle moves, and air is not blown to the condenser 101b on the vehicle rear side.

### PRIOR ART LITERATURES

### PATENT LITERATURE

Patent Literature 1: Re-publication of PCT International Publication No. WO2012/001735

### SUMMARY OF INVENTION

It is an objective of the present disclosure to provide an air-conditioning unit having a guide plate that can reduce a distributional deviation of an air flow flowing into a heat exchanger.

An air-conditioning unit has a case, a heat exchanger, a blower, and a guide plate. The case is provided with a first suction port and a second suction port. The heat exchanger has a first area and a second area into which air from the first suction port or the second suction port flows. The blower causes air flows flowing from the first suction port and the second suction port toward the heat exchanger, and the air flows passing through the heat exchanger. The guide plate is arranged in the case and suppresses a collision of an air flow from the first suction port with an air flow from the second suction port.

The guide plate is supported relative to the case to be movable between a first position and a second position. The guide plate guides air drawn from the first suction port to flow toward the first area of the heat exchanger, and guides air drawn from the second suction port to flow toward the second area of the heat exchanger, when the guide plate is positioned at the first position. The guide plate guides air drawn from the first suction port to flow toward the first area and the second area when the guide plate is positioned at the second position.

According to the above-described configuration, a distribution of air flow is biased since an air flow flowing into the first area becomes stronger than an air flow flowing into the second area when a volume of air from the first suction port becomes greater than a volume of air from the second suction port, in a case where the guide plate is positioned at the first position. However, a distributional deviation of air flows flowing into the first area and the second area can be reduced by positioning the guide plate at the second position.

### BRIEF DESCRIPTION OF DRAWINGS

The above and other objects, features and advantages of the present disclosure will become more apparent from the following detailed description made with reference to the accompanying drawings. In the drawings:
FIG. 1 is a perspective view illustrating a case of an air-conditioning unit according to a first embodiment.
FIG. 2 is a partial cross-sectional view taken along a line II-II shown in FIG. 1.
FIG. 3 is a schematic cross-sectional view taken along a line III-III shown in FIG. 1.
FIG. 4 is an explanatory diagram explaining that a guide plate shown in FIG. 3 is biased by a spring.
FIG. 5 is a schematic cross-sectional view corresponding to FIG. 3 and illustrating an air-conditioning unit according to a second embodiment.
FIG. 6 is a schematic cross-sectional view corresponding to FIG. 3 and illustrating an air-conditioning unit according to a third embodiment.
FIG. 7 is a cross-sectional view taken along a line VII-VII shown in FIG. 6.
FIG. 8 is a schematic cross-sectional view corresponding to FIG. 3 and illustrating an air-conditioning unit according to a fourth embodiment.
FIG. 9 is a cross-sectional view taken along a line IX-IX shown in FIG. 8.
FIG. 10 is a plan view illustrating a modification example of a guide plate shown in FIG. 9.
FIG. 11 is a partial cross-sectional view corresponding to FIG. 2 and illustrating an air-conditioning unit according to a fifth embodiment.
FIG. 12 is a side view illustrating a guide plate according to a sixth embodiment.
FIG. 13 is a schematic cross-sectional view corresponding to FIG. 3 and illustrating an air-conditioning unit according to a seventh embodiment.
FIG. 14 is a flow chart showing a control of the air-conditioning unit according to the seventh embodiment.
FIG. 15 is a perspective view illustrating an air-conditioning unit according to a reference example, the air-conditioning unit is on a condition of being arranged in a ceiling of a bus.
FIG. 16 is a view illustrating an inside configuration of the air-conditioning unit shown in FIG. 15.
FIG. 17 is a diagram illustrating an arrangement of the air-conditioning unit shown in FIG. 16.
FIG. 18 is a diagram illustrating an arrangement of an air-conditioning unit, other than the air-conditioning unit shown in FIG. 16, according to another reference example.

### DESCRIPTION OF EMBODIMENTS

Embodiments of the present disclosure will be described hereinafter referring to drawings. In the embodiments, a part that corresponds to or equivalents to a matter described in a preceding embodiment may be assigned with the same reference number, and descriptions of the part may be omitted. When only a part of a configuration is described in an embodiment, parts described in preceding embodiments may be applied to the other parts of the configuration.

The parts may be combined even if it is not explicitly described that the parts can be combined. The embodiments may be partially combined even if it is not explicitly described that the embodiments can be combined, provided there is no harm in the combination.

### (First Embodiment)

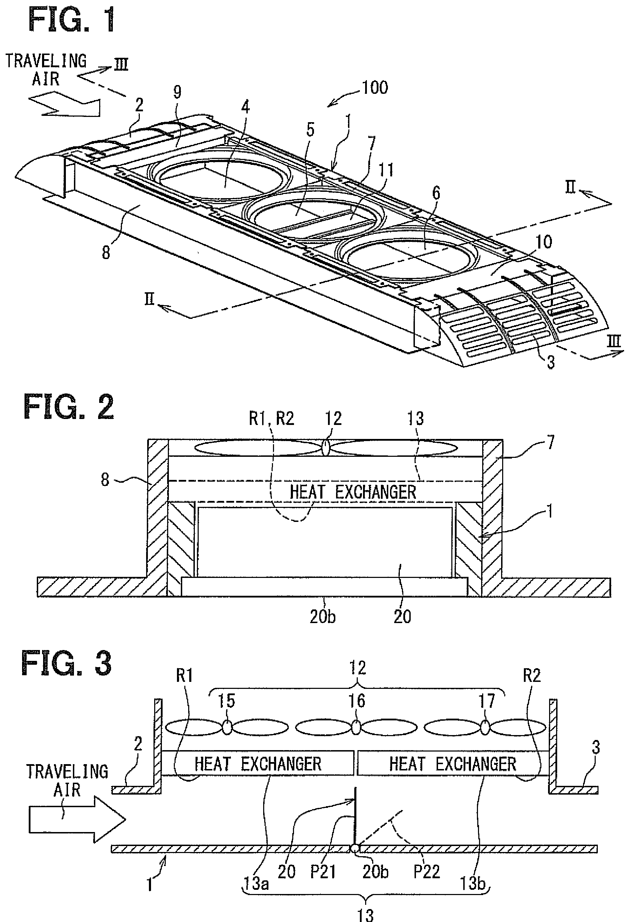

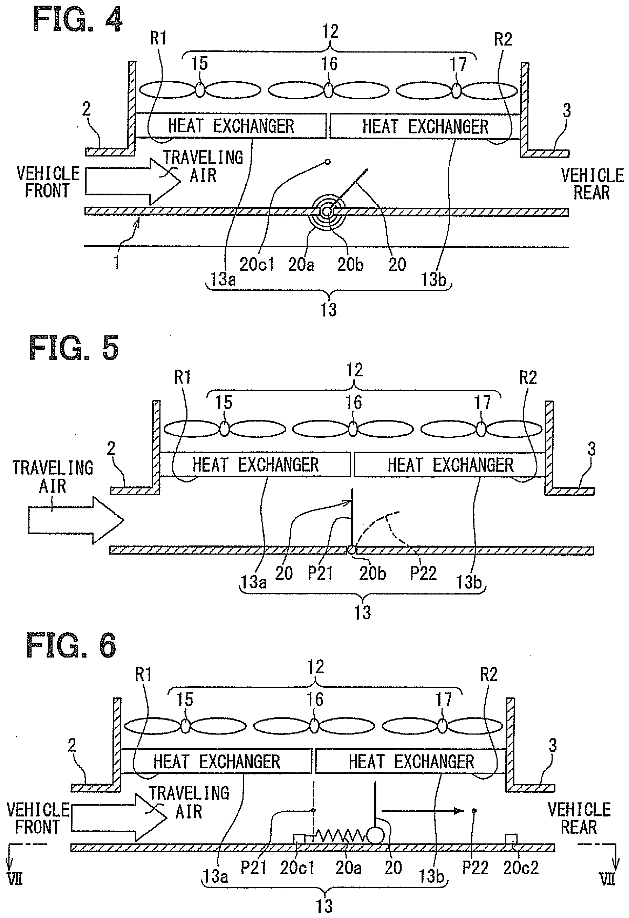

A first embodiment will be described hereafter referring to FIG. 1 through FIG. 4. FIG. 1 illustrates a case of an air-conditioning unit 100. The air-conditioning unit 100 is arranged in a ceiling of a bus similar to a reference example shown in FIG. 5. A case 1 is provided with a suction port configured by a first suction port 2 and a second suction port 3. A blowing outlet is configured by attachment holes 4, 5, 6 for blowers that will be described later. FIG. 1 illustrates the case 1 on a condition that the blowers and a heat exchanger are not attached. The case 1 is provided with three of the attachment holes 4, 5, 6. Single blower is attached to each of the attachment holes 4, 5, 6.

FIG. 2 is a partial cross-sectional view taken along a line II-II shown in FIG. 1. A blower 12 has an axial fan, an electric motor that rotates the axial fan, and a frame that fixes the axial fan etc. to the case. FIG. 2 is a schematic diagram, and the electric motor etc. is not shown.

FIG. 3 is a cross-sectional view taken along a line III-III shown in FIG. 1. The blower 12 actually includes a first blower 15, a second blower 16, and a third blower 17. When referring the blower 12, the blower 12 collectively means the first blower 15, the second blower 16, and the third blower 17. The blower 12 causes a flow of air from the first suction port 2 and a flow of air from the second suction port 3, and the flows of air pass through a heat exchanger 13. As shown in FIG. 1, the case 1 has two angles 7, 8, a front bridge 9, a rear bridge 10, and a center bridge 11. The two angles 7, 8 extend in a front-rear direction of a vehicle. The front bridge 9, the rear bridge 10 and the center bridge 11 bridge between the two angles 7, 8.

As shown in FIG. 2, the heat exchanger 13 is disposed under the blower 12, i.e., on an upstream side of the blower 12 in a flow direction of air. The heat exchanger 13 can be referred to as a heat exchanging device 13. The heat exchanger 13 includes a first heat exchanger 13a and a second heat exchanger 13b as shown in FIG. 3. When referring to the heat exchanger 13, the heat exchanger 13 collectively means the first heat exchanger 13a and the second heat exchanger 13b. The heat exchanger 13 functions as an exterior condenser in a cooling performance of a refrigeration cycle device. An arrangement of the first heat exchanger 13a and the second heat exchanger 13b is the same as an arrangement of the condensers 101a, 101b of the reference example shown in FIG. 18. Therefore, according to a layout of the present embodiment, a length of the heat exchanger 13 in a front-rear direction of the vehicle is smaller as compared to a layout of the reference example shown in FIG. 16 and FIG. 17.

As shown in FIG. 3, the heat exchanger 13 has a first area R1 into which air from the first suction port 2 flows and a second area R2 into which air from the second suction port 3 flows. The first area R1 is an air suction area in a surface of the first heat exchanger 13a that has a length, shown by a one-dot line in FIG. 1, corresponding to a length from the front bridge 9 to the center bridge 11. The second area R2 is an air suction area in a surface of the second heat exchanger 13b that has a length, shown by a two-dot line, corresponding to a length from the rear bridge 10 to the center bridge 11.

The three blowers 15, 16, 17 are the first blower 15 that is attached to the attachment hole 4 for the blower, the second blower 16 that is attached to the attachment hole 5, and the third blower 17 that is attached to the attachment hole 6. The first blower 15 faces the first area R1. The second blower 16 faces a half of the first area R1 and a half of the second area R2. The third blower 17 faces the second area R2.

As shown in FIG. 3, a guide plate 20 is arranged in the case 1. The guide plate 20 suppresses a collision of air from the first suction port 2 with air from the second suction port 3. The guide plate 20 is supported relative to the case 1 to pivot between a first position P21 and a second position P22 that is tilted. In other words, the guide plate 20 is rotatably supported in the case 1 and rotates between the first position P21 and the second position P22.

The guide plate 20 guides air (i.e., traveling air) drawn from the first suction port 2 to the first area R1 of the heat exchanger 13 and guides air drawn from the second suction port 3 to the second area R2 of the heat exchanger 13 when the guide plate 20 is positioned at the first position P21 as shown in FIG. 3. The guide plate 20 guides air drawn from the first suction port 2 to the first area R1 and the second area R2 of the heat exchanger 13 when the guide plate 20 is positioned at the second position P22.

The guide plate 20 is a movable damper and provided as an air guide plate that rotates around a rotary shaft 20b. The rotary shaft 20b is rotatably fixed in an air passage defined in the case 1. The first suction port 2 is provided on a front side of the vehicle as shown in FIG. 3 and draws the traveling air by being open frontward. The second suction port 3 is provided on a rear side of the vehicle and is open rearward.

The guide plate 20 is biased by a spring 20a to rotate around the rotary shaft 20b in a direction from the second position P22 to the first position P21 as shown in FIG. 4, and is locked at the first position P21 by a stopper 20c1 as shown in FIG. 3. The guide plate 20 rotates toward the second position P22 shown in FIG. 3 against the spring 20a when an air flow from the first suction port 2 is stronger than an air flow from the second suction port 3 and when the guide plate 20 is pushed by the air flow from the first suction port 2.

The spring 20a is configured by a power spring as shown in FIG. 4. The power spring has one end fixed to the case 1 and the other end fixed to the rotary shaft 20b. Accordingly, the rotary shaft 20b is biased to rotate counterclockwise on a condition shown in FIG. 4, and the guide plate 20 is stayed at the first position P21 by the stopper 20c1 normally. The spring 20a is not limited to be a power spring, and a spring having various shapes can be used as the spring 20a.

According to the present embodiment, the guide plate 20 is supported in the case 1 to move between the first position P21 and the second position P22. The guide plate 20 guides air drawn from the first suction port 2 to the first area R1 of the heat exchanger 13 and guides air drawn from the second suction port 3 to the second area R2 of the heat exchanger 13 when the guide plate 20 is positioned at the first position P21.

The guide plate 20 guides air drawn from the second suction port 3 to the first area R1 and the second area R2 of the heat exchanger 13 when the guide plate 20 is positioned at the second position P22. As a result, an air flow flowing into the first area R1 becomes extremely stronger than an air flow flowing into the second area R2 when a volume of air from the first suction port 2 becomes larger than a volume of air from the second suction port 3 in a case that the guide plate 20 is positioned at the first position P21. However, a distributional deviation of air flow flowing into the first area R1 and the second area R2 can be reduced by positioning the guide plate 20 at the second position P22.

According to the present embodiment, the guide plate 20 is pushed by an air flow from the first suction port 2 and inclines toward the second position P22 against the spring 20a when an air flow from the first suction port 2 is stronger than an air flow from the second suction port 3. Therefore, the guide plate 20 can be operated without a specific actuator, and the distributional deviation of air flows flowing into the first area R1 and the second area R2 can be reduced.

The first suction port 2 is provided on the front side of the vehicle and draws the traveling air by being open frontward. The second suction port 3 is provided on the rear side of the vehicle to be open rearward. Accordingly, a distributional deviation of air flows flowing into the first area R1 and the second area R2 caused by drawing the traveling air when being mounted in the vehicle can be reduced by an operation of the guide plate 20.

According to the present embodiment, the guide plate 20 is biased by the spring 20a to rotate around the rotary shaft 20b in the direction from the second position P22 to the first position P21, and is locked by the stopper 20c at the first position P21. The guide plate 20 is pushed by an air flow from the first suction port 2 and rotates toward the second position P22 against the spring 20a when the air flow from the first suction port 2 is stronger than an air flow from the second suction port 3.

Accordingly, the guide plate is pushed by an air flow from the first suction port and rotates toward the second position against the spring when the air flow from the first suction port is stronger than an air flow from the second suction port. Thus, the guide plate can be movable, and the distributional deviation of air flows flowing into the first area R1 and the second area R2 can be reduced.

### (Second Embodiment)

A second embodiment will be described hereafter referring to FIG. 5. The guide plate 20 shown in FIG. 5 is made of rubber material having an elastic deformability. The guide plate 20 is stayed at the first position P21. The guide plate 20 is pushed by an air flow from the first suction port and deformed elastically, and a tip of the guide plate 20 moves toward the second position P22, when an air flow flowing into the air passage from the first suction port 2 is stronger than an air flow flowing into the air passage from the second suction port 3.

According to the present embodiment, the guide plate 20 is pushed by an air flow from the first suction port 2 and deformed elastically, and the tip of the guide plate 20 moves from the first position P21 to the second position P22, when the air flow from the first suction port 2 is stronger than an air flow from the second suction port 3. Therefore, a specific actuator is not necessary.

Although the guide plate 20 is configured by a plate that is easily deformed elastically according to the present embodiment, the plate configuring the guide plate 20 may be made of a synthetic resin having a great hardness, and the rotary shaft 20b of the guide plate 20 may be configured by an elongated member that is easily twisted.

### (Third Embodiment)

A third embodiment will be described hereafter referring to FIG. 6. The guide plate 20 shown in FIG. 6 is biased by a spring in a direction (i.e., leftward) from the second position P22 toward the first position P21 as shown in FIG. 6, and is locked by a stopper 20c1 at the first position P21 located between the first heat exchanger 13a and the second heat exchanger 13b.

As shown in FIG. 6, the guide plate 20 extends the spring 20a when an air flow flowing into the air passage from the first suction port 2 is stronger than an air flow flowing into the air passage from the second suction port 3. The guide plate 20 moves parallel from the first position P21, which is located between the first heat exchanger 13a and the second heat exchanger 13b, to the second position P22.

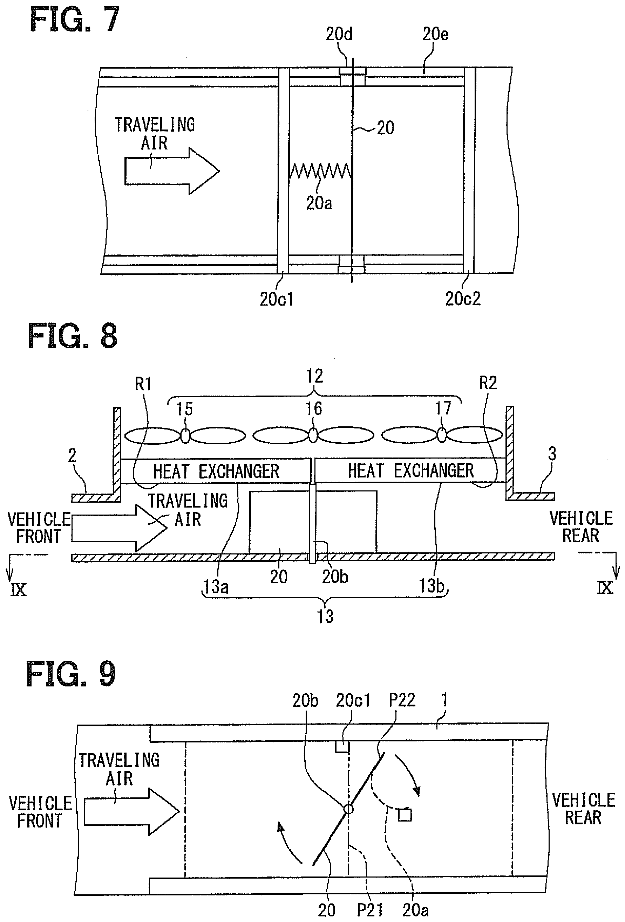

FIG. 7 is a cross-sectional view taken along a line VII-VII shown in FIG. 6 and shows the guide plate 20. Wheels 20d are respectively attached to both ends of the guide plate 20. The wheels 20d move along rails 20e respectively. The spring 20a is configured by a coil spring, and the coil spring has one end fixed to a first stopper 20c1 and the other end fixed to the guide plate 20.

The guide plate 20 moves parallel by a pressure of the traveling air toward a second stopper 20c2. A largest displacement amount of the guide plate 20 is set by the second stopper 20c2.

According to the present embodiment, the guide plate 20 is pushed by an air flow from the first suction port 2 and moves parallel toward the second position P22 against the spring 20a when the air flow from the first suction port 2 is stronger than the second suction port 3. Accordingly, air from the first suction port 2 easily flows into the second area R2. Thus, the guide plate 20 can be moved without a specific actuator, and the distributional deviation of air flows flowing into the first area R1 and the second area R2 can be reduced.

### (Fourth Embodiment)

A fourth embodiment will be described hereafter referring to FIG. 8 and FIG. 9. As shown in FIG. 8, the guide plate 20 is a movable damper that rotates around the rotary shaft 20b. As shown in FIG. 9, the guide plate 20 is rotatably attached to the rotary shaft 20b that is perpendicular to a wall of the case 1, and swings around the rotary shaft 20b.

As shown in FIG. 8, the first suction port 2 is provided on the front side of the vehicle and draws the traveling air by being open frontward. The second suction port 3 is provided on the rear side of the vehicle and is open rearward. As shown in FIG. 9, the guide plate 20 is biased by the spring 20a to rotate around the rotary shaft 20b in a direction from the second position P22 toward the first position P21, and is locked by the first stopper 20c1 at the first position P21 shown by a two-dot line. The guide plate 20 is pushed by an air flow from the first suction port 2 and rotates toward the second position P22 shown by a solid line against the spring 20a when the air flow from the first suction port 2 is stronger than an air flow from the second suction port 3.

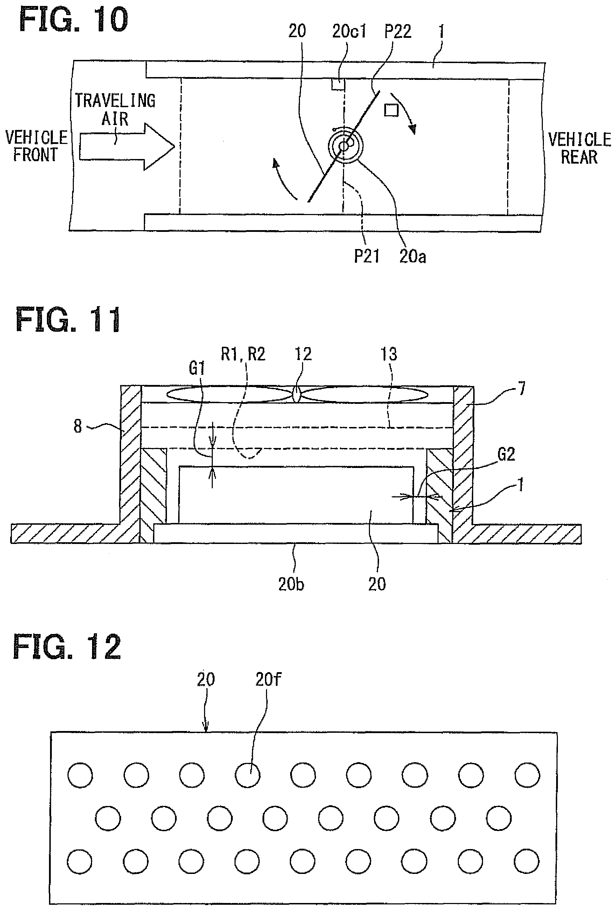

The spring 20a shown in FIG. 9 is configured by a curved plate spring, however the spring 20a may be configured by a power spring as shown in FIG. 10.

According to the present embodiment, the guide plate 20 guides air drawn from the first suction port 2 to flow toward the first area R1 of the heat exchanger 13, and guides air drawn from the second suction port 3 to flow toward the second area R2 of the heat exchanger 13, when the guide plate 20 is positioned at the first position P21.

The guide plate 20 guides air drawn from the first suction port 2 to flow toward the first area R1 and the second area R2 of the heat exchanger 13 when the guide plate 20 is positioned at the second position P22. Accordingly, a distribution of air flows is biased since an air flow flowing into the first area R1 becomes stronger than an air flow flowing into the second area R2 when a volume of air from the first suction port 2 is greater than a volume of air from the second suction port 3 in a case that the guide plate 20 is positioned at the first position P21. On the other hand, the distributional deviation of air flows flowing into the first area R1 and the second area R2 can be reduced by moving the guide plate 20 to the second position P22.

### (Fifth Embodiment)

A fifth embodiment will be described hereafter referring to FIG. 11. As shown in FIG. 11, a first void G1 is provided between the heat exchanger 13 and the guide plate 20, and a second void G2 is provided between the case 1 and the guide plate 20. Both of a dimension of the first void G1 and a dimension of the second void G2 are larger than two centimeter. The guide plate 20 is movable against an elastic force of the spring similar to the first embodiment. An inclined amount of the guide plate 20 moving against strength of an air flow is adjusted by the dimensions of the first void G1 and the second void G2. In addition, the distributional deviation of air flows flowing into the first area R1 and the second area R2 can be reduced by air leaking from the first void G1 and the second void G2.

According to the present embodiment, the first void G1 and the second void G2 have dimensions that are required to provide the guide plate 20 to be movable. A volume of air leaking from the first void G1 and the second void G2 can be adjusted by the dimensions of the first void G1 and the second void G2. In addition, a displacement amount of the guide plate 20 moving between the first position P21 and the second position P22 by receiving an air flow is adjusted, and air leaking through the first void G1 and the second void G2 can flow to the second area R2. Accordingly, the guide plate 20 can appropriately reduce the distributional deviation of air flows flowing into the first area R1 and the second area R2. That is, the guide plate 20 hardly moves against the spring since a volume of air leaking through the first void G1 and the second void G2 increases as the dimensions of the first void G1 and the second void G2 increase, and thereby the traveling air can flow into the second area R2.

### (Sixth Embodiment)

A sixth embodiment will be described hereafter referring to FIG. 12. FIG. 12 illustrates a side surface of the guide plate 20 used in the sixth embodiment. As shown in FIG. 12, the guide plate 20 of the present embodiment is provided with through holes 20f, and the through holes 20f adjust the displacement amount of the guide plate 20 moving between the first position P21 and the second position P22 with respect to the case 1. Specifically, it becomes harder for the guide plate 20 to move from the first position P21 to the second position P22 as a volume of air passing through the through holes 20f increases, on a condition of fixing a volume of air pushing the guide plate 20. Therefore, the present embodiment can obtain the same effects as a case that the dimensions of the first void G1 and the second void G2 shown in FIG. 11 increase. Furthermore, the distributional deviation, between the first area R1 and the second area R2, of air flows flowing into the first area R1 and the second area R2 of the heat exchanger 13 can be reduced by air passing through the through holes 20f.

According to the present embodiment, the guide plate 20 has through holes 20f. The displacement amount of the guide plate 20 moving between the first position P21 and the second position P22 is adjusted by adjusting a volume of air passing through the through holes 20f. As s result, the guide plate 20 can appropriately reduce the distributional deviation of air flows flowing into the first area R1 and the second area R2. Specifically, a volume of air passing through the through holes 20f increases by increasing a diameter of the through holes 20f or by increasing a quantity of the through holes 20f. Accordingly, it becomes harder for the guide plate 20 to move against the spring 20a, and the distributional deviation of air flows flowing into the first area R1 and the second area R2 can be reduced by guiding the traveling air into the second area R2.

As described above, the through holes 20f are provided such that the displace amount of the guide plate 20 moving between the first position P21 and the second position P22 is adjusted by a quantity or an arrangement of the through holes 20f. That is, it becomes harder for the guide plate 20 to move from the first position P21 to the second position P22 as a volume of air passing through the through holes 20f increases on a condition of fixing a volume of air pushing the guide plate 20. Thus, the present embodiment can obtain the same effects as a case that the dimensions of the first void G1 and the second void G2 shown in FIG. 11 increase.

### (Seventh Embodiment)

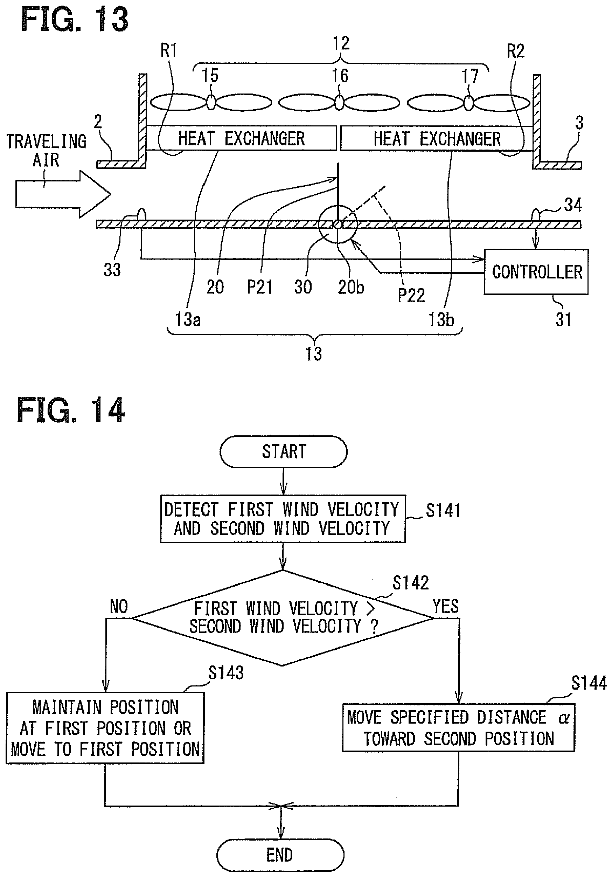

A seventh embodiment will be described hereafter referring to FIG. 13 and FIG. 14. The rotary shaft 20b that rotates the guide plate 20 interlocks an output shaft of an electric motor configuring the actuator 30. The displacement amount of the guide plate 20 moving between the first position P21 and the second position P22 is adjusted by the actuator 30. A direct-current commutating motor or a stepping motor can be used as the electric motor.

The actuator 30 driving the guide plate 20 is controlled by a controller 31.

As shown in FIG. 13, a wind speed sensor is disposed in the first suction port 2 and configures a first wind speed determining part 33 that determines a first wind speed of air drawn into the first suction port 2 by an actual measurement or an operation. A wind speed sensor is disposed in the second suction port 3 and configures a second wind speed determining part 34 that determines a second wind speed of air drawn into the second suction port 3 by an actual measurement or an operation.

FIG. 14 shows a control flow performed in the controller 31. As shown in FIG. 14, the first wind speed determining part 33 and the second wind speed determining part 34 respectively detect the first wind speed and the second wind speed at S141 when the control starts. The first wind speed and the second wind speed may be calculated using a pressure detected by a pressure sensor. According to the present embodiment, the wind speed sensor is a thermal anemometer.

A temperature of an object falls when the object is put in air after being heated, since heat in the object transfers to the air. The temperature of the object after being heated further falls when air is blown to the object. Thus, a thermal anemometer can be used as the wind speed sensor when determining a relationship between a wind speed of air blowing to the object after being heated and a heat amount (i.e., a heat diffusing amount) transferring to the air.

The control flow advances to S142 and compares the first wind speed and the second wind speed after detecting the first wind speed and the second wind speed at S141.

The control flow advances to S144 when the first wind speed on a side adjacent to the first suction port 2 is determined to be faster than the second wind speed on a side adjacent to the second suction port 3 at S142, and moves the guide plate 20 a specified dimension α from the first position P21 to the second position P22 using the actuator 30.

On the other hand, the control flow advances to S143 when the first wind speed on the side adjacent to the first suction port 2 is not faster than the second wind speed on the side adjacent to the second suction port 3. At S143, the guide plate 20 is maintained at the first position P21 when the guide plate 20 is located at the first position P21, and is returned to the first position P21 when the guide plate 20 is not located at the first position P21.

The above-described control performed by the controller 31 is repeated in a specified cycle. That is, the first wind speed and the second wind speed are detected repeatedly in the specified cycle (S141), and the guide plate 20 is moved the specified dimension α toward the second position P22 at S144 at each time where the first wind speed is determined to be faster than the second wind speed at S142.

According to the present embodiment, the guide plate 20 can be certainly moved to an appropriate position by the actuator 30. For example, the actuator 30 uses a driving force thereof and forces the guide plate 20 to move such that an air flow reaches the second area R2 even when the traveling air is weak. Further, the guide plate can be locked at a required position without a stopper since a worm gear reducing mechanism is provided between the electric motor and the guide plate.

In addition, according to the present embodiment, the control that moves the guide plate 20, at S144, the specified dimension α in a direction from the first position P21 toward the second position P22 using the actuator 30 when the first wind speed is determined to be faster than the second wind speed at S142 is repeated in a specified cycle. Accordingly, a displacement speed of the guide plate 20 can be adjusted by adjusting a value of the specified dimension α. The specified dimension α is set by adjusting a variable resistor in the controller 31.

That is, a responsivity of the guide plate 20 relative to a variation of a wind speed can be adjusted in a manner that a drive performance is adjusted by adjusting the specified dimension α. Accordingly, a movement of the guide plate 20 is optimized, a cause of noise is suppressed, and the distributional deviation of air flows flowing into the first area R1 and the second area R2 can be reduced by the guide plate 20.

Thus, a wind speed is detected, and the control that moves the guide plate 20 using the actuator 30 depending on the detected wind speed is repeated in a specified cycle, such that the displacement speed of the guide plate 20 can be adjusted to be a required speed by setting the specified dimension α that sets the displacement amount. Therefore, the guide plate 20 does not respond excessively to a rapid change of an air flow and does not move unnecessary, and thereby a noise can be reduced.

### (Other Modifications)

While the present disclosure has been described with reference to preferred embodiments thereof, it is to be understood that the disclosure is not limited to the preferred embodiments and constructions. The present disclosure is intended to cover various modification and equivalent arrangements within a scope of the present disclosure. It should be understood that structures described in the above-described embodiments are preferred structures, and the present disclosure is not limited to have the preferred structures. The present disclosure is intended to cover various modifications and equivalent arrangements within the scope of the present disclosure.

A supporting position of the rotary shaft 20b for the guide plate 20 is located at middle between the first area R1 and the second area R2 according to the above-described embodiments, however the supporting position may be just under the second area R2. The blower 12 is arranged on the downstream side of the heat exchanger 13 in the flow direction of air, however the blower 12 may be arranged on an upstream side in the air flow direction.

The stopper is not a necessary component and may be omitted. The guide plate 20 may be displaced to be parallel to a horizontal direction. More than one heat exchanger is arranged according to the above-described embodiments, however more than one heat exchanger may be integrated with each other to be a single heat exchanger. In this case, the single heat exchanger has the first area R1 and the second area R2. The stopper is illustrated to be abut on a flat plate portion of the guide plate 20 according to the above-described embodiments, however the stopper may be arranged at any location as long as a rotation of the rotary shaft 20b is stopped.

A first wind pressure and a second wind speed pressure may be compared with each other instead of comparing the first wind speed and the second wind speed.

The displacement speed of the guide plate 20 from the first position P21 to the second position P22, i.e., a rotation speed of the electric motor may be adjusted by an actuator.

## Claims

1. An air-conditioning unit comprising:
a case (1) that is provided with a first suction port (2) and a second suction port (3);
a heat exchanger (13) that has a first area (R1) and a second area (R2) into which air from the first suction port (2) or the second suction port (3) flows;
a blower (12) that causes air flows flowing from the first suction port (2) and the second suction port (3) toward the heat exchanger (13), the air flows passing through the heat exchanger (13); and
a guide plate (20) that is arranged in the case (1) and suppresses a collision of an air flow from the first suction port (2) with an air flow from the second suction port (3), wherein
the guide plate (20) is supported relative to the case (1) to be movable between a first position (P21 and a second position (P22),
the guide plate (20) guides air drawn from the first suction port (2) to flow toward the first area (R1) of the heat exchanger (13), and guides air drawn from the second suction port (3) to flow toward the second area (R2) of the heat exchanger (13), when the guide plate (20) is positioned at the first position (P21), and
the guide plate (20) guides air drawn from the first suction port (2) to flow toward the first area (R2) and the second area (R2) when the guide plate (20) is positioned at the second position (P22).

2. The air-conditioning unit according to claim 1, wherein
the first suction port (2) is provided on a front side of a vehicle and draws a traveling air, and
the second suction port (3) is provided on a rear side of the vehicle.

3. The air-conditioning unit according to claim 1 or 2, wherein
the guide plate (20) is biased by a spring (20a) to rotate around a rotary shaft (20b) in a direction from the second position (P22) toward the first position (P21), and is locked at the first position (P21) by a stopper (20c), and
the guide plate (20) is pushed by an air flow from the first suction port (2) and rotates toward the second position (P22) against the spring (20a) when the air flow from the first suction port (2) is stronger than an air flow from the second suction port (3).

4. The air-conditioning unit according to claim 1 or 2, wherein
the guide plate (20) is made of an elastically-deformable material and is stayed at the first portion (P21), and
the guide plate (20) deforms elastically, and a tip of the guide plate (20) moves toward the second position (P22), when an air flow from the first suction port (2) is stronger than an air flow from the second suction port (3), and when the air flow from the suction port (2) pushes the guide plate (20).

5. The air-conditioning unit according to claim 1 or 2, wherein
the guide plate (20) is biased by a spring (20a) with respect to the case (1) in a direction from the second position (P22) toward the first position (P21) and locked at the first position (P21) by a stopper (20c), on a normal condition that the guide plate is not pushed by an air flow, and
the guide plate (20) moves parallel from the first position (P21) toward the second position (P22) against the spring (20a) when an air flow from the first suction port (2) is stronger than an air flow from the second suction port (3), and when the guide plate is pushed by the air flow from the first suction port (2).

6. The air-conditioning unit according to any one of claims 1 to 5, wherein
a first void (G1) is provided between the heat exchanger (13) and the guide plate (20),
a second void (G2) is provided between the case (1) and the guide plate (20),
both of a dimension of the first void (G1) and a dimension of the second void (G2) are larger than two centimeter, and
an air flow from the first suction port (2) leaks through the first void (G1) and the second void (G2) and flows into the second area.

7. The air-conditioning unit according to any one of claims 1 to 6, wherein
a plurality of through holes (20f) is provided in the guide plate (20), and
an air flow from the first suction port (2) flows into the second area through the plurality of through holes (20f).

8. The air-conditioning unit according to claim 1 or 2, further comprising:
an actuator (30) that operates the guide plate (20);
a controller (31) that controls the actuator (30);
a first wind speed determining part (33) that determines a first wind speed of air drawn into the first suction port (2) by an actual measurement or an operation; and
a second wind speed determining part (34) that determines a second wind speed of air drawn into the second suction port (3) by an actual measurement or an operation, wherein
the actuator moves the guide plate (20) from the first position (P21) toward the second position (P22) when the first wind speed is faster than the second wind speed.

9. The air-conditioning unit according to claim 8, wherein
the controller (31) repeats, in a specified cycle, a control that moves the guide plate (20) a specified dimension (α) in a direction from the first position (p21) toward the second position (P22) when the first wind speed is faster than the second wind speed, and
a drive performance of the guide plate (20) is adjusted by adjusting a value of the specified dimension (α).

10. An air-conditioning unit comprising:
a case (1) that is provided with a first suction port (2) and a second suction port (3);
a heat exchanger (13) that has a first area (R1) and a second area (R2) into which air from the first suction port (2) or the second suction port (3) flows;
a blower (12) that causes flows of air flowing from the first suction port (2) and the second suction port (3) toward the heat exchanger (13), the air passing through the heat exchanger (13); and
a guide plate (20) that is arranged in the case (1) and suppresses a collision of an air flow from the first suction port (2) with an air flow from the second suction port (3), wherein
the guide plate (20) operates to guide air drawn from the first suction port (2) or the second suction port (3) to flow toward both of the first area (R1) and the second area (R2).
